# EUROPEAN PATENT SPECIFICATION

(11) **EP 2 771 304 B1**
(45) Date of publication and mention of the grant of the patent: **26.02.2020**
(21) Application number: 12780388.0
(22) Date of filing: 24.10.2012
(51) Int. Cl.: C04B 28/02, C04B 40/00, C09K 8/467

(54) **POLYURETHANE POWDER BLEND WITH REDISPERSIBLE POLYMER POWDER FOR CEMENT COMPOSITIONS**
POLYURETHANPULVERMISCHUNG MIT REDISPERGIERBAREM POLYMERPULVER FÜR ZEMENTZUSAMMENSETZUNGEN
MÉLANGE DE POUDRE DE POLYURÉTHANE AVEC POUDRE DE POLYMÈRE DISPERSIBLE POUR DES COMPOSITIONS CIMENTAIRES

(30) Priority: 28.10.2011 US 201161552756 P
(43) Date of publication of application: 03.09.2014
(73) Proprietor: Dow Global Technologies LLC, Midland, MI 48674 (US)
(72) Inventor: DOMBROWSKI, Juergen, 06122 Halle (DE); KUEHN, Hartmut, 06116 Halle (DE); PERELLO, Margarita, CH-8600 Duebendorf (CH); SCHARLEMANN, Sonja, 30900 Wedemark (DE)
(74) Representative: Houghton, Mark Phillip
(86) International application number: PCT/US2012/061516
(87) International publication number: WO 2013/062986

(56) References cited:
- EP-A1- 2 014 625
- WO-A2-2009/099717
- CN-A- 101 921 091
- DE-A1- 2 854 755
- DE-A1- 19 731 485
- DE-A1-102005 053 336
- DE-U1-202005 015 642

## Description

The present invention relates to additives prepared from a polyurethane powder and a redispersible polymer powder for use in hydraulic binders, such as cement compositions.

In construction applications, mortars may be prepared with cement, sand, and organic polymer. To reduce shipping costs, the polymer can be shipped and added in dry form as a redispersible polymer powder. Redispersible polymer powders are used as binders to improve the adhesion of cementitious adhesive formulations. The powdered form of the polymer is generally produced by spray drying a liquid polymer composition to obtain a free flowing powder. To perform its function in the application formulation to which it is added, such as concrete, it is desired that in the application formulation the polymer powder is easily redispersible.

Redispersible polymer powders made from emulsion polymers, such as vinyl acetate/ethylene copolymers, styrene/butadiene copolymers, and vinyl acetate/versatic acid vinyl ester copolymers are widely used in various construction applications, such as cement based tile adhesives (CBTA), and self level flooring compounds (SLFC) to improve the mechanical properties of the cementitious composition.

However, different types of performance issues are presented depending upon the polymer used to make the redispersible polymer powder, and the cementitious application for which the redispersible polymer powder is employed. For example, when the chemistry of the polymer used in the redispersible polymer powder is a carboxylated latex, mortar density of the mortar in which it is employed tends to be very low, and the set time for the mortar tends to increase. When the chemistry of the redispersible polymer powder is based on vinyl acetate, then the adhesion after water immersion is generally very limited. Also, to obtain good impact resistance with a cementitious base coat for external thermal insulation systems (ETICS), either the polymer used needs to have a very low Tg (which is very costly to produce as a redispersible polymer powder), or the dosage of the redispersible polymer powder has to be increased significantly.

U.S. Patent Application Publication No. US 2009054588 to Alois Maier et al discloses a fluoromodified admixture, containing isocyanate and urethane and/or urea groups, for use as a liquid or powdery admixture for the permanent hydrophobic and/or oleophobic and/or dirt-repellent finishing of products based on inorganic or hydraulic or mineral binders. According to Maier et al, the fluoromodified admixture may be employed as a liquid or powdery additive or dispersant for aqueous suspensions based on inorganic or hydraulic or mineral binders, such as cement, calcined lime, gypsum [alpha]-hemihydrate, [0006]-hemihydrate, [alpha]/[0007]-hemihydrate), anhydrite (natural anhydrite, synthetic anhydrite, REA anhydrite), geopolymers, and concrete. The fluoromodified admixtures, it is disclosed are surprisingly outstandingly suitable even at a very low dosage for the permanent hydrophobic and/or oleophobic and/or dirt-repellent in-bulk finishing of products based on inorganic or hydraulic or mineral binders, without the fundamental property profile (e.g. compressive and flexural tensile strength) of these products being substantially influenced. In the case of products such as hardened building material compositions based on the fluoromodified admixtures, a markedly lower water absorption (avoidance of frost damage and corrosion) and a suppression of bleeding on the surfaces (avoidance of visual impairment) is observed according to Maier et al. It is also disclosed that in spite of the high fluoromodification an adequate self-dispersibility is afforded, and as a result of the thereby strongly liquefying action of the fluoromodified admixtures, the water/cement value (W/C value) in the case of modified concrete or (dry) mortar systems is markedly lower than in the case of unmodified concrete or (dry) mortar systems. However, the additives of Maier et al require the production of a specific polymer additive for hydrophobization and oleophobization of products, and are not disclosed as enhancing or improving the performance of redispersible polymer powders such as those made from emulsion polymers, such as vinyl acetate/ethylene copolymers, styrene/butadiene copolymers, and vinyl acetate/versatic acid vinyl ester copolymers in various cementitious applications.

The present inventors have sought to solve the problem of providing a redispersible polymer powder (RDP) which provides increased wet mortar density and still maintains excellent workability and quick open time, quickens setting time, improves impact resistance, and increases adhesion after water immersion.

### SUMMARY OF THE INVENTION

The present invention, in its various aspects, is as set out in the accompanying claims.

The present invention provides an additive for hydraulic binders, such as a cement additive, comprised of a powdered polyurethane flexible foam and a water redispersible polymer powder (RDP), which are preblended. The water redispersible polymer powder may be comprised of a co-dried admixture of a water insoluble film-forming polymer and an optional colloidal stabilizer. The amount of the powdered polyurethane flexible foam may be from 10% by weight to 80% by weight, preferably from 20% by weight to 70% by weight, more preferably from 40% by weight to 60% by weight, for example 50% by weight, based upon the total weight of the powdered polyurethane flexible foam and the water redispersible polymer powder. The powdered polyurethane flexible foam is preferably a ground recycled flexible polyurethane foam. The average particle size of the ground flexible polyurethane foam employed in the present invention is from 5 microns to 500 microns, for example from 10 microns to 200 microns, preferably from 20 microns to 150 microns, most preferably from 40 microns to 120 microns, for example from 40 microns to 80 microns. The redispersible polymer powder may have an exemplary average particle size of from 5 microns to 150 microns, preferably from 20 microns to 90 microns, most preferably from 50 microns to 80 microns.

Use of the powdered polyurethane flexible foam as a partial replacement for a redispersible polymer powder (RDP) in cementitious compositions unexpectedly provides improved performance of cementitious compositions for numerous applications, such as increased wet mortar density with excellent workability and quick open time, quick setting times, improved impact resistance, and increased adhesion after water immersion for the cementitious compositions. The use of recycled polyurethane foam powder materials is beneficial for the environment, and reduces cost of cementitious dry mix formulations. The additives of the present invention may be included in cementitious mortar for applications such as cement based tile adhesives (CBTA) and external thermal insulating composite systems (ETICS) based coat applications.

In an aspect of the present invention, an additive for a hydraulic binder may be produced by dry blending a powdered polyurethane flexible foam and a water redispersible polymer powder (RDP), to obtain a substantially homogeneous preblend, using conventional powder mixing or blending apparatus.

Also described herein, but not according to the invention, is a dry mix formulation, or a cement composition such as a cement based tile adhesive(CBTA) or an external thermal insulating composite system (ETICS), which may be produced by admixing cement ingredients with a powdered polyurethane flexible foam and a water redispersible polymer powder (RDP), the water redispersible polymer powder comprising a co-dried admixture of a water insoluble film-forming polymer and a colloidal stabilizer, the amount of the powdered polyurethane flexible foam being from 10% by weight to 80% by weight, preferably from 20% by weight to 70% by weight, more preferably from 40% by weight to 60% by weight, for example 50% by weight, based upon the total weight of the powdered polyurethane flexible foam and the water redispersible polymer powder. The total amount of the powdered polyurethane flexible foam and the water redispersible polymer powder may be 0.1% by weight to 10% by weight, preferably from 0.5% by weight to 3% by weight, based upon the weight of the dry mix formulation. The powdered polyurethane flexible foam and the water redispersible polymer powder may be admixed with the hydraulic binder ingredients, such as cement ingredients, separately, but are preferably preblended to obtain an additive, such as a cement additive, which is admixed with the hydraulic binder ingredients, such as cement ingredients, to obtain a dry mix formulation of the present invention.

### DETAILED DESCRIPTION OF THE INVENTION

Unless otherwise indicated, all temperature and pressure units are room temperature and standard pressure (STP). All ranges recited are inclusive and combinable.

All phrases comprising parentheses denote either or both of the included parenthetical matter and its absence. For example, the phrase "(meth)acrylate" includes, in the alternative, acrylate and methacrylate, and mixtures thereof.

As used herein, unless otherwise indicated, the phrase "molecular weight" refers to a number average molecular weight as measured in a conventional manner. The number average molecular weight is the ordinary arithmetic mean or average of the molecular weights of the individual macromolecules. It is determined by measuring the molecular weight of n polymer molecules, summing the weights, and dividing by n. The number average molecular weight of a polymer can be determined by gel permeation chromatography, viscometry (Mark-Houwink equation), and all colligative methods like vapor pressure osmometry or end-group determination. For polyvinyl alcohol, the PVOH molecular weight, unless otherwise indicated, means the mean weight of the molar masses, Mw, determined by gel permeation chromatography (GPC) combined with static light scattering (absolute method) on re-acetylized specimens. The accuracy of the Mw values is estimated at ±15%.

As used herein, the term "polymer" refers, in the alternative, to a polymer made from one or more different monomer, such as a copolymer, a terpolymer, a tetrapolymer, a pentapolymer etc., and may be any of a random, block, graft, sequential or gradient polymer.

As used herein, unless otherwise indicated, the measured glass transition temperature (T_{g}) is used. As used herein the term "calculated T_{g}" refers to the T_{g} of a polymer calculated by using the Fox equation (T. G. Fox, Bull. Am. Physics Soc., Volume 1, Issue No. 3, page 123 (1956). As used herein the term "measured T_{g}" means a T_{g} that is measured using differential scanning calorimetry or DSC (rate of heating 10°C per minute, T_{g} taken at the midpoint of the inflection.)

As used herein, the phrase "wt.%" stands for weight percent.

As used herein, unless otherwise indicated, the phrase "average particle size", refers to the particle diameter or the largest dimension of a particle in a distribution of powder particles as determined by laser light scattering such that 50 wt. % of the particles in the distribution are smaller than the particle and 50 wt.% of the particles in the distribution are larger than the particle. The particle size distribution may be measured using a Coulter LS 230 particle size analyzer, a product of Beckman Coulter (Brea, California) per manufacturer's recommended Procedures via laser scattering. The scattering light from particles through laser scattering and polarization intensity differential scattering is collected as a function of angle, and subsequently converted to a particle size distribution.

In the present invention, ground polyurethane flexible foams, preferably ground recycled polyurethane flexible foams are used with a wide variety of redispersible polymer powders (RDPs), preferably as a preblended additive, to prepare new cementitious construction materials having improved overall performance of cementitious compositions or mortar, in applications such as cement based tile adhesives (CBTA), or external thermal insulating composite systems (ETICS) based coat applications. The use of the powdered polyurethane flexible foam with an RDP unexpectedly provides an increase in wet mortar density while maintaining excellent workability and quick open time, quicker setting times, improved impact resistance, and increased adhesion after water immersion. For example, when the chemistry of the polymer is a carboxylated latex, replacement of a portion of the RDP with a ground polyurethane flexible foam, increases the wet mortar density without loss of workability and quickens the setting time of the mortar. Also, when the chemistry of the redispersible polymer powder (RDP) is based on vinyl acetate, the use of a ground polyurethane flexible foam in combination with a VAE type of RDP, significantly improves the wet adhesion values of the cementitious composition. Use of ground polyurethane flexible foam in combination with conventional RDPs having a medium to high Tg, provides a better impact resistance of the base coat of the cementitious adhesive at low dosages of the RDP. Employment of polyurethane flexible foam powder prepared from recycled polyurethane flexible foam as a partial replacement for a redispersible polymer powder reduces the cost of dry mix cementitious formulations and is beneficial for the environment.

The ground or powdered polyurethane flexible foam employed in the present invention may be prepared by grinding any conventional flexible polyurethane foam into a powder. Powders prepared from rigid polyurethane foams have not been found to provide the improvements in properties or performance of cementitious compositions as achieved with flexible foams. A polyurethane (PUR and PU) which may be employed is any polymer composed of a chain of organic units joined by carbamate (urethane) links. Polyurethane polymers are formed through step-growth polymerization or polyaddition reaction, by reacting a monomer with at least two isocyanate functional groups, or a polyisocyanate, such as a diisocyanate, with another monomer with at least two hydroxyl or alcohol groups, or a polyol, in the presence of a catalyst. Commercially, available polyurethane flexible foams may be ground for use in the present invention, but commercially available recycled polyurethane flexible foam powders are preferably employed. Commercially available polyurethane flexible foams which may be employed in the present invention may include conventional additives such as chain extenders, cross linkers, surfactants, flame retardants, blowing agents, pigments, and fillers, in conventional amounts. Exemplary polyisocyanates which may be employed in conventional amounts for the polyurethane foams used in the present invention are aromatic diisocyanates, such as diphenylmethane diisocyanate (MDI) or toluene diisocyanate (TDI), aliphatic diisocyanates, such as hexamethylene diisocyanate (HDI) or isophorone diisocyanate (IPDI), and polymeric isocyanates such as polymeric diphenylmethane diisocyanate, which is a blend of molecules with two-, three-, and four- or more isocyanate groups, with an average functionality of 2.7. Conventional tri-functional polyols for producing flexible polyurethane foams may be employed in conventional amounts for the production of polyurethane foams for use in the present invention. Exemplary of such polyols are glycerin, and trimethylolpropane (TMP), polyether glycols, such as base-catalyzed addition products of propylene oxide (PO), or ethylene oxide (EO) onto a hydroxyl or amine containing initiator, and polyester polyols such as polyesterification products of a di-acid, such as adipic acid, with a glycol. Softer, elastic, and more flexible polyurethanes result when linear polyether polyols, such as difunctional polyethylene glycols, are used to create the urethane links. However, more rigid products result if polyfunctional polyols are used, as these create a three-dimensional cross-linked structure which can be in the form of a low-density foam.

Conventional catalysts, blowing agents, and surfactants may be used in conventional amounts to make the polyurethanes for use in the present invention.

There are then two main foam variants: one in which most of the foam bubbles (cells) remain closed, and the gas(es) remains trapped, the other being systems which have mostly open cells, resulting after a critical stage in the foam-making process (if cells did not form, or became open too soon, foam would not be created). If the flexible foams have closed cells, their softness is severely compromised, they become pneumatic in feel, rather than soft; so, generally speaking, flexible foams are required to be open-celled. The opposite is the case with most rigid foams. Here, retention of the cell gas is desired since this gas, especially the fluorocarbons, gives the foams their key characteristic of a high thermal insulation performance. However, in the present invention, to obtain the beneficial contribution from the recycled polyurethane foam powder, the original polyurethane foam has to be flexible and not rigid, so preferably the foams are open-celled and the polyol employed is tri-functional.

Commercially available recycled polyurethane flexible foam powders which may be employed in the hydraulic binders or cementitious compositions and additives, such as cement additives, of the present invention are produced by Mobius Technologies, Lincoln, CA. The recycled polyurethane flexible foam powders may be produced from scrap polyurethane foam from manufacturing, cutting or post consumer sources, slabstock polyurethane foam, molded polyurethane foam, foam mattresses, car seats, or other flexible polyurethane foam feedstock. The polyurethane foam may be turned into an ultrafine powder by, for example, a shredding step in which foam is reduced to pieces about the size of popcorn, followed by a grinding step in which the shredded pieces are reduced in a roll mill to an ultrafine powder. The powder may be passed through a sifter in which coarse particles are separated for recycling back to the roll mill. The powdered polyurethane flexible foam may be coated, with a coating agent such as a silica, but uncoated powders are preferred for their lower cost.

The average particle size of the ground flexible polyurethane foam employed in the present invention is from 5 microns to 500 microns, for example from 10 microns to 200 microns, preferably from 20 microns to 150 microns, most preferably from 40 microns to 120 microns, for example from 40 microns to 80 microns. Preferably, the average particle size of the ground flexible polyurethane foam may be similar to the average particle size of the RDP so as to avoid settling out or separation of the foam particles from the RDP particles.

The amount of the powdered polyurethane flexible foam employed in the cementitious compositions and in the additives, such as hydraulic binder additives or cement additives, of the present invention may be from 10% by weight to 80% by weight, preferably from 20% by weight to 70% by weight, more preferably from 40% by weight to 60% by weight, for example 50% by weight, based upon the total weight of the powdered polyurethane flexible foam and the water redispersible polymer powder, or hydraulic binder additive, such as cement additive.

The amount of powdered polyurethane flexible foam employed in the cementitious composition may be the same or different from the amount of redispersible polymer powder (RDP) it replaces. For example, the total amount of the powdered polyurethane flexible foam and the RDP employed may be the same as the amount of RDP originally employed before the partial replacement with the powdered polyurethane flexible foam. The total amount of the powdered polyurethane flexible foam and the water redispersible polymer powder, or the hydraulic binder additive, such as cement additive, of the present invention, may generally be 0.1% by weight to 10% by weight, preferably from 0.5% by weight to 3% by weight, based upon the weight of the dry mix formulation.

The powdered polyurethane flexible foam and the water redispersible polymer powder may be admixed with the hydraulic binder ingredients, such as cement ingredients, separately to obtain a dry mix formulation, but are preferably preblended to obtain a cement additive which is admixed with the cement ingredients to obtain a dry mix formulation of the present invention. A cement additive, or other hydraulic binder additive in accordance with the present invention may be produced by dry blending a powdered polyurethane flexible foam and a water redispersible polymer powder (RDP), to obtain a substantially homogeneous preblend, using conventional powder mixing or blending apparatus and conventional mixing times and techniques.

Water redispersible polymer powders for use in the present invention may be conventional, known RDPs which include a co-dried admixture of a film-forming polymer, such as a water insoluble film-forming polymer, and a colloidal stabilizer, which are prepared in known, conventional manner. The polymers which may be employed in the present invention are any film-forming polymers, which may be prepared in known or conventional manner. Exemplary of homopolymers or copolymers which may be used as the water insoluble film-forming polymers are vinyl acetate homopolymers, copolymers of vinyl acetate with ethylene, copolymers of vinyl acetate with ethylene and one or more further vinyl esters, copolymers of vinyl acetate with ethylene, copolymers of vinyl acetate with ethylene and vinyl chloride, and styrene-1,3-butadiene copolymers. The film-forming polymers may be at least one polymer prepared from at least one ethylenically unsaturated monomer, such as a styrene butadiene copolymer, a styrene butadiene copolymerized with other comonomers such as vinyl comonomers, a vinylacetate ethylene (VAE) copolymer, a VAE/VA-VeoVA copolymer mixture (vinyl acetate ethylene copolymer/vinyl acetate-vinyl ester of versatic acid copolymer mixture), a polyurethane, or a polyolefin. Other polymers that are film forming but less water insoluble may be used, such as cellulose, cellulose ethers like alkyl celluloses and hydroxyalkyl celluloses and those useful as colloidal stabilizers, as well as modified celluloses like hydrophobically modified cellulose ethers such as the reaction products of the above-stated cellulose ethers with hydrophobically modified glycidyl ethers, which have alkyl residues with C₃ to C₁₅ carbon atoms or arylalkyl residues with C₇ to C₁₅ carbon atoms.

The water-insoluble film-forming polymers may be prepared in conventional manner from ethylenically unsaturated monomers, such as vinyl monomers. Exemplary of water-insoluble film-forming polymers which may be used are vinyl homopolymers or vinyl acetate, styrene/butadiene, and mixtures thereof.

Exemplary monomers which may be employed are vinyl esters, such as vinyl acetate; and vinylaromatic monomers, such as styrene. These monomers may be copolymerized with one another or with other ethylenically unsaturated monomers.

Exemplary of monomers which can be copolymerized with vinyl acetate and/or styrene to obtain water insoluble film forming polymers for use herein are ethylene and olefins such as isobutene; the vinyl esters of saturated, branched or unbranched monocarboxylic acids having from 1 to 12 carbon atoms, such as vinyl propionate, the esters of unsaturated mono- or dicarboxylic acids possessing 3 to 6 carbon atoms with alkanols possessing 1 to 10 carbon atoms, such as methyl, ethyl, butyl and ethylhexyl maleates and fumarates; vinylaromatic monomers such as methylstyrenes and vinyltoluenes; vinyl halides such as vinyl chloride and vinylidene chloride, and diolefins, such as butadiene.

The water insoluble film-forming polymer may have a surface which is carboxylated, in conventional amounts. The water insoluble film forming polymer preferably is carboxylated, particularly for highly hydrophobic polymers such as styrene butadiene copolymers, for redispersibility. The amount of carboxylation may generally be from 0.1% to 15% by weight, for example from 0.5% by weight to 5% by weight, of at least one ethylenically unsaturated monocarboxylic acid, dicarboxylic acid, salts thereof, or mixtures thereof, based upon the total comonomer weight or the weight of the water insoluble film forming polymer, such as a styrene butadiene copolymer with itaconic acid.

The water insoluble film forming polymers used to obtain the redispersible polymer powders may comprise carboxylated copolymers of vinyl aromatic comonomers and 1,3-diene comonomers. The water insoluble film forming polymers may have a controlled distribution and degree of neutralization of the carboxylic groups which is obtained in known manner.

Examples of vinylaromatic comonomers which may be used are styrene, alpha-methylstyrene, C₁-C₄ alkyl-styrenes such as o-vinyltoluene and tert-butylstyrene, with styrene being preferred. Examples of 1,3-dienes which may be used are 1,3-butadiene and isoprene, with 1,3-butadiene being preferred. Examples of comonomers which may be used are ethylenically unsaturated mono- and dicarboxylic acids and their salts, such as fumaric acid, maleic acid and/or itaconic acid. Dicarboxylic acids or their salts, particularly itaconic acid, fumaric acid, their salts and combinations thereof, are preferred.

The amount of carboxylic groups in the polymer that are located at the surface of the polymer particles in the powder, and the amount of carboxylic groups that are present in their salt form in the polymer powder may be controlled so that at least 50%, preferably at least 60%, more preferably at least 70% of the total number of carboxylic groups present in the polymer are located at the surface of the polymer particles in the powder and at least 75%, preferably at least 85%, more preferably at least 90%, and most preferably at least 95% of the carboxylic groups in the powder are present in their salt form. Useful cations in the carboxylic acid salts are ammonium, alkali metal ions and alkaline earth metal ions.

A high percentage of the carboxylic groups located at the surface of the polymer particles in the powder can be obtained: a) by the sole use of one or more ethylenically unsaturated dicarboxylic acid(s) as the comonomer, such as fumaric or itaconic acid or combinations thereof, or b) by staged monomer feeding, such as addition of the comonomer at an advanced stage of the polymerizations, for example when 60% by weight or more of the monomers are polymerized or c) by conducting the polymerization at a certain pH, for example at a pH of 2 to 9, preferably at a pH of 2 to 6.

Examples of optional comonomers which may be employed in the water insoluble film-forming polymers are ethylenically unsaturated crosslinking comonomers, such as comonomers with two or more ethylenic unsaturations, such as divinyl benzene, divinyl adipates, diallyl maleate, or triallyl cyanurate, or postcrosslinking comonomers, such as allyl N-methylolcarbamate, alkyl ethers, such as isobutoxy ether, or esters of allyl N-methylol-carbamate. Other examples of comonomers which may be used are silicon- functional comonomers, such as vinyltrialkoxysilanes and vinylmethyldialkoxysilanes. Examples of alkoxy groups which may be present include ethoxy radicals and ethoxy(propylene glycol) ether radicals.

The polymer may comprise: a) from 20% to 79.9%, preferably from 30% to 70%, of the one or more vinyl aromatic comonomers, b) from 20% to 79.9%, preferably from 20% to 60% of the one or more 1,3-diene comonomers, c) from 0.1% to 15%, preferably from 0.5% to 10%, of the one or more ethylenically unsaturated mono-and di-carboxylic acid comonomers, and d) from 0 to 40%, preferably from 0 to 20% of the one or more additional comonomers, based on the total weight of the copolymer. Most preferably, the polymer comprises from 50 to 70 percent of comonomer a), from 25 to 49 percent of comonomer b), and from 1 to 5 percent of comonomer c).

Also, a basic compound may be employed in an aqueous polymer dispersion of the water insoluble film-forming polymer to convert the majority of the carboxylic acid groups or carboxylic acid anhydride groups in the polymer into the salt form of the acid groups. The amount of the basic compound included may be: 1) equivalents of at least 0.5, preferably from 0.6 to 1.2, more preferably from 0.7 to 1.1, most preferably from 0.8 to 1.0 of a basic compound per equivalent of carboxylic groups in the polymer, or 2) a basic compound sufficient to adjust the pH of the dispersion to at least 9.5, preferably at least 10.0, more preferably at least 10.5, and preferably up to 12.5, more preferably up to 12.0, most preferably up to 11.5. The basic compound is preferably an inorganic basic compound, more preferably a strong inorganic basic compound, particularly an alkali metal hydroxide or an alkaline earth metal hydroxide, such as NaOH, KOH, LiOH, Mg(OH)₂ or Ca(OH)₂. Most preferably, the basic compound is an alkali metal hydroxide, such as sodium hydroxide or potassium hydroxide.

The film-forming polymers may have a glass transition temperature of from -60°C to +80°C, preferably from -20°C to +50°C, more preferably from -10°C to +30°C. The monomers and the proportions by weight of the comonomers may generally be chosen to obtain a desired glass transition temperature. The glass transition temperature Tg of the polymers can be determined in a known manner by means of differential scanning calorimetry (DSC).

Conventional colloidal stabilizers in conventional amounts may be employed in the production of the redispersible polymer powders (RDPs). Exemplary of colloidal stabilizers which may be used are polyvinyl alcohols; polyvinyl acetals; polyvinylpyrrolidones; polysaccharides in water-soluble form, e.g. starches (amylose and amylopectin), celluloses and their carboxymethyl, methyl, hydroxyethyl and hydroxypropyl derivatives; proteins such as casein or caseinate, soy protein, gelatins; lignin sulfonates; synthetic polymers such as poly(meth)acrylic acid, copolymers of (meth)acrylates with carboxyl-functional comonomer units, poly(meth)acrylamide, polyvinylsulfonic acids and their water-soluble copolymers; melamine formaldehyde sulfonates, naphthaleneformaldehyde sulfonates, and styrene-maleic acid and vinyl ether-maleic acid copolymers. Generally, the preferred colloidal stabilizer employed is a polyvinyl alcohol (PVOH), such as MOWIOL 4-88, MOWIOL 8-88, MOWIOL 13-88 and MOWIOL 18-88, which are each commercially available from Kuraray Europe GmbH, Division PVA/PVB D-65926 Frankfurt am Main, Germany and have a viscosity DIN 53015 ranging from 2 ± 0.5 mPa-s to 18 ± 0.5 mPa-s (4% aqueous solution at 20°C) or more, a degree of hydrolysis (saponification) of 87.7 ± 1.0 mol. %, an ester value DIN 53401 of 140 ± 10 mg KOH/g, a residual acetyl content of 10.8 ± 0.8 w/w%, and a maximum ash content of 0.5% (calculated as Na₂O).

The colloidal stabilizer, such as polyvinyl alcohol alone, or in combination with another colloidal stabilizer may be employed in an amount of at least 0.1% by weight, generally at least 2% by weight, for example from 5% by weight to 35% by weight, based upon the weight of the water insoluble film-forming polymer.

The redispersible polymer powder for use in the present invention may be prepared in conventional manner from an aqueous dispersion comprising the water insoluble film-forming polymer, an optional colloidal stabilizer such as polyvinyl alcohol, and other optional components. To prepare the redispersible polymer powder the aqueous dispersion is dried, for example by spray drying, freeze drying or fluidized-bed drying. Preferably the aqueous dispersion is spray dried in conventional manner. Further additives such as surfactants and defoamers, and fillers may be employed, if desired, and the further additives are preferably added in conventional amounts to the aqueous dispersion before drying. For example, an antifoamer may be employed in an amount of up to 1.5% by weight, based on the weight of the polymer particles. Conventional superplasticizers may be employed in an amount of at least 0.01% by weight, preferably from 5% by weight to 15% by weight, based upon the weight of the water redispersible polymer powder (RDP).

The spray drying can take place in conventional spray drying systems, for example a dispersion may be atomized by using single, twin or multifluid nozzles or a rotating disk in a stream of drying gas which may be heated. In general, air, nitrogen or nitrogen enriched air is employed as the drying gas, the drying gas temperature generally not exceeding 250°C. The drying temperature preferably is from 110 to 180°C, more preferably from 130 to 170°C. The product outlet temperature may generally be from 30°C to 120°C, preferably from 40°C to 90°C, depending on the plant, the T_{g} of the polymeric composition, and the desired degree of drying.

An anticaking agent (antiblocking agent) may be added to the polymer powder to increase storage stability, for example in order to prevent caking and blocking and/or to improve the flow properties of the powder. This addition is preferably carried out as long as the powder is still finely dispersed, for example still suspended in the drying gas. The anticaking agent is preferably of mineral origin. It is preferably added in an amount of up to 40% by weight, based on the total weight of polymeric constituents. Examples of anticaking agents include but are not limited to kaolin, calcium carbonate, magnesium carbonate, talc, gypsum, silica and silicates, and mixtures thereof. The particle sizes of the anticaking agents are preferably in the range of from 100nm to 10µm. A preferred anticaking agent is kaolin.

The X50 size of the particle size distribution of the redispersible powder depends on drying conditions and drying equipment. X50 represents the median diameter in micrometers, which means that 50% by weight of the particles are smaller than this diameter. For example, the produced water-redispersible polymer powder may have an X50 particle size diameter of from 5 to 150 micrometers, preferably from 20 to 90 micrometers, most preferably from 50 to 80 micrometers. The particle size distribution of the powder can be measured by laser diffraction using a particle size analyzer "Sympatec Helos" at a measuring range of 1.8 - 350 µm and dispersing the powder by compressed air.

The weight of the polymer particles in the redispersible polymer powder, for example, weight of the water insoluble film-forming polymer described herein in the redispersible polymer powder (RDP), may preferably be from 40% by weight to 95% by weight, more preferably from 65% by weight to 85% by weight, of the total weight of the water-redispersible polymer powder.

The redispersible polymer powders, which may have an average particle size of from 5 micrometers to 150 micrometers, preferably from 20µm to 90µm, most preferably from 50µm to 80µm, may be readily dispersed into deionized water.

The powdered polyurethane flexible foam and water redispersible polymer powder (RDP) additives of the present invention and the water-redispersible polymer powders of the present invention have a variety of uses in building materials which comprise an inorganic hydraulic binding agent or cementitious composition. Thus, the present invention is also directed to a composition comprising an inorganic hydraulic binding agent or binder, and powdered polyurethane flexible foam and water redispersible polymer powder (RDP), or hydraulic binder additive, or cement additive as described above. Typically, the inorganic hydraulic binding agent or hydraulic binder is cement or calcium sulfate hemihydrate (plaster of Paris), preferably cement. Examples of suitable cements include Portland cement, alumina cement, pozzolanic cement, slag cement, magnesia cement and phosphate cement.

The ability to add the powdered polyurethane flexible foam and redispersible powder to a building material separately or in the form of the present additive or preblend provides a composition which is a ready-to-use dry mix. The additive can already be mixed with the hydraulic binding agent and additional components such, as for example, sand to produce a one-component system for the end user. At the construction site only water has to be added and no annoying dosing of other ingredients is necessary. Typical building materials wherein the redispersible polymer powder of the present invention may be used are one-component dry mixes containing an inorganic hydraulic binding agent, preferably a one-component e cement-containing dry mix. More specific illustrative examples of building materials wherein the additive can be used include mortars, tile or board adhesives, gypsum or cement plasters or renders, decorative renders, self-leveling flooring compositions, one-component sealants and exterior insulation finishing systems. The corresponding hardened building materials obtained from materials including the redispersible polymer powder of the present invention exhibit good adhesion strength also after immersion in water (water resistance).

The powdered polyurethane flexible foam may be employed in blends with one or more redispersible polymer powders (RDPs), such as VAE RDPs, VAE/VA-VeoVA RDPs, polyurethane RDPs, polyolefin dispersion based RDPs, styrene butadiene RDPs, and mixtures thereof. Whilst the combination of the powdered polyurethane flexible foam and RDP of the present invention is for use in a hydraulic binder, it may also be employed as a functional additive in compositions such as construction materials, personal care compositions, agricultural compositions, in high salt concentration applications or environments, such as off-shore oil well cementing, oil and gas drilling and cementing, and in hard water. Additional uses of the powders are in waste management applications, such as compositions for synthetic covers for bulk material piles, such as waste, coal sludge containment, soil, soil erosion control, which minimize water infiltration, nuisance fugitive dust, odor, and affinity to birds. The powders may be used in alternative landfill covers that are sprayable, use inexpensive widely available and environmentally friendly recycled materials, have good adherence to plastics and glass waste, and can form/harden within a short time, and in adhesion enhancing admixtures. The powders may also be employed in the production of foams, such as polyurethane foams.

The water-redispersible polymer powder and powdered polyurethane flexible foam may be used as an additive in a setting composition which further includes an inorganic hydraulic binder. Examples of inorganic binders include cements, such as Portland cement, alumina cement, pozzolanic cement, slag cement, magnesia cement and phosphate cement; gypsum hemihydrate and water-glass. Illustrative uses of the additive polymer composition according to the present invention are in tile adhesives, construction adhesives, renders, joint mortars, plasters, troweling compositions, filling compositions, such as floor filling compositions (e.g. self-leveling flooring compounds), concrete repair joints, joint mortars, tape joint compounds, concrete, water proofing membrane applications, crack isolation membrane applications, and additives for ceramic processing. In particular, the use of the water-redispersible polymer powder described herein in a setting composition, e.g. in cement-based tile adhesives or in external thermal insulation composite systems, result in compositions with high initial adhesion strength, high adhesion strength after immersion in water (water resistance), and high adhesion strength after allowing a certain "open time" before final application of the hydrated setting composition. The additive may also be employed as a binder for slip casting, of for example raw materials such as silica, alumina, alkali metal oxides, and alkaline earth metal oxides.

A preferred use of the powdered polyurethane flexible foam and RDP additive is in cementitious or hydraulic compositions or other compositions which exhibit a high pH, for example a pH of at least 11, for example from 11.5 to 13.5. The additive of the present invention may be employed in mortar repair or grout compositions, tile adhesives, such as cement-based tile adhesives. Cement-based tile adhesives may generally comprise 5 to 50 parts by weight of cement, preferably Portland cement, as the hydraulic binder; 40 to 70 parts by weight of quartz sand, preferably having a particle size of from 0.1mm to 0.5mm, as the main filler, and 0.1% to 10% by weight, preferably 1% to 6% by weight (based on the dry weight of the tile adhesive) of the additive composition according to the present invention. Further optional components include one or more cellulose ethers (preferably in a total amount of 0.05% to 1% by weight, more preferably 0.2% to 0.5% by weight, based on the dry weight of the tile adhesive) to control rheology, water retention, slip resistance and improved workability; quartz or lime stone powder having a particle size of from 30µm to 60µm as fine co-filler to improve consistency and workability; and cellulose or mineral fibers to improve the slip resistance.

Another use of the powdered polyurethane flexible foam and RDP additive powders is in self- leveling flooring compounds SLFC. The powders may be added to improve the adhesion to the substrate, the flexibility, the abrasion resistance and the aging properties. The SLFC may generally include the same components in the same amounts as employed in the CBTAs. A retarder or retardant, such as trisodium citrate (TriNa-Citrate), such as Censperse PC13 available from Newchem AG, Pfäffikon, Switzerland, may be employed in conventional amounts generally employed in SLFC. The SLFC may also include calcium sulfate (gypsum), an accelerator, such as lithium carbonate, and a liquefier, dispersant, or superplasticizer, such as a water soluble co-polymer dispersant, such as MELFLUX 2651F, which is based on modified polycarboxylate technology and produced by BASF Construction Polymers, Kennesaw GA, in conventional amounts. The powdered polyurethane flexible foam and RDP additive powders may also be used in external thermal insulation systems ETICS, particularly as an adhesive on the thermally insulating board layer to reduce the water absorption and improve the impact resistance of the external thermal insulation system. Such compositions may include 15% to 45% by weight cement, and 0.01% to 0.7 % by weight of at least one cellulose ether.

Furthermore, the powdered polyurethane flexible foam and RDP additive powders according to the present invention may be used in paper products, paperboard products, carpet backing, paints or coatings or in binders for wood, paper or textiles coatings or impregnating compositions, preferably in the absence of a substantial amount of an inorganic hydraulic binding agent, more preferably in the absence of any amount of an inorganic hydraulic binding agent. For example, the powdered polyurethane flexible foam and RDP additive powders may be used as the sole binder in coating compositions and adhesives. The powdered polyurethane flexible foam and RDP additive powders may also be used in automotive applications.

The following examples are provided for illustrative purposes only and are not intended to limit the scope of the claims that follow. Unless otherwise indicated, all parts and percentages are by weight, all temperatures are in °C, and all pressures are in bars or atmospheric unless otherwise indicated to the contrary:

Test methods used include the W/S-ratio: this is is set by slump-test 150mm ±5mm and preparation of the mortar is according to EN 1348 with 5 minute resting time.

### Equipment

The equipment employed in the test is:
- PS-board type Schwenk EPS040 DEO dm/WAB (03/10
- fibre cement board Type Etaplan N (03/09) water absorption 1.3-1.9cm³
- Open time according to EN 1346 and quick open time according to CE-48.5 earthenware tiles from Dt. Steinzeug GmbH Type #250232 H₂O-absorption approx. 13.2%
- glue: Delomet 03

### Climate

The climate conditions employed in the test are:
humidity: 50% ±5%; temperature: 23°C ±2°C; and air movement: < 0.2m/s

### EXAMPLE 1

In this Example, the use of recycled polyurethane flexible foam powder (RPU) with various average particle sizes in combination with various redispersible polymer powders, styrene butadiene (SB) RDP, and vinyl acetate ethylene vinyl acetate-vinyl versatate (VAEVV) RDP are evaluated in external thermal insulating composite systems (ETICS) for quick open time, adhesion, workability, impact resistance, and water uptake. Formulations with the RDP alone are also evaluated for comparison. Use of a recycled polyurethane rigid foam powder in combination with a styrene-butadiene RDP is also evaluated for comparison. The formulations, sample descriptions, equipment, and climate employed in the tests and the results of the evaluations are shown in Tables 1, 2, and 3, below:

**TABLE 1: Cement-based Dry Mortar Formulation**

| **RAW INGREDIENT** | **Wt%** |
|---|---|
| Portland Cement Type 1 42.5 | 28.00 |
| Quartz Sand | 61.38 |
| Carbonate filler, (Calcitwerk Schön & Hippelein GmbH & Co. KG) | 8.00 |
| RDP and/or RPU of Samples 1 to 9 of Table 2 | 2.50 |
| Cellulose Ether (F75M - Methocel 254 hydroxypropyl methyl cellulose (HPMC) Dow Wolff Cellulosics | 0.12 |
| Total Dry Mix | 100.00 |

**TABLE 2: Sample Description for RDP Materials**

| | |
|---|---|
| 1. RDP VAEVV | Redispersible powder based on Vinyl Acetate Ethylene Vinyl Acetate Vinyl Versatate polymer, X-50 particle size 50-80µm, MFFT + 2°C |
| 2. RDP SB | Redispersible powder based on Styrene Butadiene, X-50 particle size 40-60µm, MFFT + 8°C |
| 3. RPU¹ 100R | Recycled PU flexible foam powder (X-50 particle size 40-80µm) treated with 10% of silica |
| 4. RPU 200R | Recycled PU flexible foam powder (X-50 particle size 80-120µm) treated with 10% of silica |
| 5. RPU 300-2/100 | Recycled PU rigid foam powder (X-50 particle size 50-100µm) treated with 10% of silica |
| 6. 50/50 RDP SB / RPU100R | 50/50 by weight blend of Redispersible powder based on Styrene Butadiene, X-50 particle size 40-60µm, MFFT + 8°C and Recycled PU flexible foam powder (X-50 particle size 40-80µm) treated with 10% of silica |
| 7. 50/50 RDP SB /RPU200R | 50/50 by weight blend of Redispersible powder based on Styrene Butadiene, X-50 particle size 40-60µm, MFFT + 8°C and Recycled PU flexible foam powder (X-50 particle size 80-120µm) treated with 10% of silica |
| 8. 50/50 RDP SB / RPU300-2/100 | 50/50 by weight blend of Redispersible powder based on Styrene Butadiene, X-50 particle size 40-60µm, MFFT + 8°C and Recycled PU rigid foam powder (X-50 particle size 50-100µm) treated with 10% of silica |
| 9. 50/50 RDP VAEVV / RPU200R | 50/50 by weight blend of Redispersible powder based on Vinyl Acetate Ethylene Vinyl Acetate Vinyl Versatate polymer, X-50 particle size 50-80µm, MFFT + 2°C and Recycled PU flexible foam powder (X-50 particle size 80-120µm) treated with 10% of silica |
| All RDPs contain 14% by weight of kaolin and 10% by weight of PVOH | |
| *MFFT = Minimum Film Forming Temperature | |

| | |
|---|---|
| 1. RPU: Recycled Polyurethane Foam | |

**Table 3: Results for Evaluation of Recycled PU Foam Powder in ETICS Base Coat**

| **Test** | | **SAMPLE** | | | | | | | | |
|---|---|---|---|---|---|---|---|---|---|---|
| | | **1** | **2** | **3** | **4** | **5** | **6** | **7** | **8** | **9** |
| | | **RDP VAEVV** | **RDP SB** | **RPU 100R** | **RPU 200R** | **RPU 300-2/100** | **RDP SB/ RPU100R** | **RDP SB/ RPU200R** | **RDP SB/ RPU300-2/100** | **RDP VAEVV/ RPU200R** |
| **Water demand w/s** | | 0.165 | 0.175 | 0.205 | 0.200 | 0.215 | 0.185 | 0.195 | 0.200 | 0.185 |
| **Slump, mm CE 63.2** | | 150 | 151 | 155 | 150 | 155 | 148 | 154 | 154 | 153 |
| **Density, g/cm³, immediately** | | 1.59 | 1.53 | 1.65 | 1.65 | 1.67 | 1.62 | 1.60 | 1.57 | 1.60 |

| **Quick Open Time, %., 22.7 ºC 49% relative humidity CE-48.1** | | | | | | | | | | |
|---|---|---|---|---|---|---|---|---|---|---|
| **wetting after 5 minutes** | | 95 | 90 | 70 | 75 | 65 | 70 | 90 | 90 | 85 |
| **wetting after 10 minutes** | | 85 | 30 | 65 | 55 | traces | 55 | 85 | 80 | 65 |
| **wetting after 15 minutes** | | 10 | <5 | traces | <5 | 0 | <5 | 35 | 40 | 20 |
| **wetting after 20 minutes** | | traces | traces | 0 | 0 | 0 | 0 | traces | traces | 15 |
| **wetting after 25 minutes** | | 0 | 0 | 0 | 0 | 0 | 0 | 0 | 0 | traces |
| **wetting after 30 minutes** | | 0 | 0 | 0 | 0 | 0 | 0 | 0 | 0 | 0 |

| **Adhesion PS, N/mm² CE 90.1** | | | | | | | | | | |
|---|---|---|---|---|---|---|---|---|---|---|
| **12 days NK (23/50), N/mm²** | | 0.11 | 0.08 | 0.04 | 0.04 | 0.03 | 0.07 | 0.09 | 0.08 | 0.08 |
| **grade** | | *1* | *1* | *6* | *6* | *6* | *1*- | *1*-*6* | *1*-*6* | *1* |
| **12 days NK (23/50), N/mm²** | | 0.06 | 0.04 | 0.04 | 0.04 | 0.03 | 0.04 | 0.04 | 0.04 | 0.04 |
| **grade** | | *3-4* | *5-6* | *6* | *5-6* | *6* | *6* | *3-6* | *6* | *6* |
| **12 days NK (23/50), N/mm²** | | 0.08 | 0.06 | 0.05 | 0.05 | 0.05 | 0.05 | 0.06 | 0.05 | 0.05 |
| **grade** | | *3* | *4* | *4-5* | *5* | *6* | *5-6* | *3-4* | *4-5* | *5* |

| **Impact Resistance (14days)** | | | | | | | | | | |
|---|---|---|---|---|---|---|---|---|---|---|
| **2.1J, average score*** | | 1.9 | 1.5 | x | X | x | 1.3 | 1.7 | 1.6 | 2.1 |
| **grade** | | ∼*2*.*1J* | =*2.1J* | *x* | *X* | *x* | =*2.1J* | ∼*2.1J* | ∼*2.1* | *<2.1J* |
| **3.0J, average score*** | | 2.5 | 2.3 | x | X | x | 2.5 | 2.3 | 2.0 | 3 |
| **grade** | | <*2.0J* | <*2.0J* | *x* | *X* | *x* | <*2.0J* | <*2.0J* | <*2.0J* | <*2.0J* |
| **Water Uptake (14days) after 24 hours, kg/m²** | | 0.82 | 0.92 | x | X | x | 0.81 | 0.77 | 0.85 | 0.83 |

| **Tensile Adhesion Strength EN 1348** | | | | | | | | | | |
|---|---|---|---|---|---|---|---|---|---|---|
| **7days nc (23/50), N/mm²** | | 0.85 | 0.75 | 0.64 | 0.60 | 0.50 | 0.80 | 0.76 | 0.72 | 0.89 |
| * | | | | | | | | | | |
| score 1: | no cracks | | | | | | | | | |
| score 2: | little cracks | | | | | | | | | |
| score 3: | cracks >5mm | | | | | | | | | |

### EXAMPLE 2

In this Example, the use of recycled polyurethane flexible foam powder (RPU) with various average particle sizes in combination with various redispersible polymer powders, styrene butadiene (SB) RDP, vinyl acetate ethylene (VAE) RDP, and vinyl acetate ethylene vinyl acetate vinyl versatate (VAEVV) RDP are evaluated in external cement based tile adhesives (CBTA) for quick open time, adhesion, workability, impact resistance, and water uptake. Formulations with the RDP alone are also evaluated for comparison. Use of a recycled polyurethane rigid foam powder in combination with a styrene-butadiene RDP is also evaluated for comparison. The formulations and the results of the evaluations are shown in Tables 4, 5, and 6:

**TABLE 4: Cement-based Dry Mortar Formulation**

| RAW INGREDIENT | Wt% |
|---|---|
| Portland Cement Type 1 42.5 | 35.00 |
| Quartz Sand F32 (Quarzwerke Frecheen) | 31.60 |
| Quartz Sand F36 (Quarzwerke Frecheen) | 30.00 |
| RDP and/or RPU of Samples 1 to 11 of Table 5 | 3.00 |
| WALOCEL MW 40000PFV hydroxyethyl methyl cellulose (HEMC) Dow Wolff Cellulosics. | 0.40 |
| Total Dry Mix | 100.00 |

| **Table 5: Samples Description for RDP and/or Recycled Polyurethane Foam (RPU)** | |
|---|---|
| 1. RDP SB | Redispersible powder based on Styrene Butadiene, MFFT + +0°C |
| 2. RDP VAE | Redispersible powder based on Vinyl Acetate Ethylene polymer, MFFT + 3°C |
| 3. RDP VAEVV | Redispersible powder based on Vinyl Acetate Ethylene Vinyl Acetate Vinyl Versatate polymer, MFFT + 5°C |
| 4. RPU 200R | Recycled PU flexible foam powder (X-50 particle size 80-120µm) not treated with silica |
| 5. RPU 300R-2 | Recycled PU rigid foam powder (X-50 particle size 50-100µm) Not treated with silica |
| 6. 50/50 RDP SB /RPU200R | 50/50 by weight blend of Redispersible powder based on Styrene Butadiene, MFFT + 0°C (Sample 1) and Recycled PU flexible foam powder (X-50 particle size 80-120µm) non-treated |
| 7. 50/50 RDP SB / RPU300R-2 | 50/50 by weight blend of Redispersible powder based on Styrene Butadiene , MFFT + 0°C (Sample 1) and Recycled PU rigid foam powder (X-50 particle size 50-100µm) non-treated |
| 8. 50/50 RDP VAE (Sample 2) / RPU200R | 50/50 by weight blend of Redispersible powder based on Vinyl Acetate Ethylene polymer, MFFT + 3°C (Sample 2) and Recycled PU flexible foam powder (X-50 particle size 80-120µm) non-treated |
| 9. 50/50 RDP VAE (Sample 2) / RPU300R-2 | 50/50 by weight blend of Redispersible powder based on Vinyl Acetate Ethylene polymer, MFFT + 3°C (Sample 2) and Recycled PU rigid foam powder (X-50 particle size 50-100µm) non-treated |
| 10. 50/50 RDP VAEVV (Sample 3) / RPU200R | 50/50 by weight blend of Redispersible powder based on Vinyl Acetate Ethylene Vinyl Acetate Vinyl Versatate polymer, MFFT + 5°C (Sample 3) and Recycled PU flexible foam powder (X-50 particle size 80-120µm) non-treated |
| 11. 50/50 RDP VAEVV (Sample 3) / RPU300R-2 | 50/50 by weight blend of Redispersible powder based on Vinyl Acetate Ethylene Vinyl Acetate Vinyl Versatate polymer, MFFT + 5°C (Sample 3) and Recycled PU rigid foam powder (X-50 particle size 50-100µm) non-treated |
| | |
| All RDPs contain 14% by weight of kaolin and 10% by weight of PVOH | |
| *MFFT = Minimum Film Forming Temperature | |

**Table 6: Results for Evaluation of Recycled PU Foam Powder in CBTA**

| **Property or Test** | **SAMPLE** | | | | | | | | | | |
|---|---|---|---|---|---|---|---|---|---|---|---|
| | **1** | **2** | **3** | **4** | **5** | **6** | **7** | **8** | **9** | **10** | **11** |
| RDP | SB | VAE | VAEVV | -- | -- | SB | SB | VAE | VAE | VAEVV | VAEVV |
| RPU | -- | -- | -- | 200R | 300-2 | 200R | 300R-2 | 200R | 300R-2 | 200R | 300R-2 |
| Water demand | 0.245 | 0.230 | 0.230 | 0.275 | 0.295 | 0.255 | 0.265 | 0.250 | 0.260 | 0.250 | 0.255 |
| density [g/cm³] | 1.39 | 1.38 | 1.35 | 1.4 | 1.34 | 1.37 | 1.37 | 1.37 | 1.35 | 1.37 | 1.32 |

| **Tensile adhesion strength EN 1348** | [N/mm²] | | | | | | | | | | |
|---|---|---|---|---|---|---|---|---|---|---|---|
| 28 days nc (23/50) | 1.12 | 1.39 | 1.29 | 1.11 | 0.33 | 1.23 | 0.75 | 1.26 | 0.93 | 1.34 | 0.84 |
| water immersion | 0.85 | 0.69 | 0.54 | 0.82 | 0.66 | 0.82 | 0.63 | 0.81 | 0.76 | 0.81 | 0.66 |
| heat aeging | 0.81 | 1.51 | 1.13 | 0.63 | 0.23 | 0.75 | 0.43 | 1.03 | 0.83 | 1.14 | 0.77 |

| **Open time EN 1346** | [N/mm²] | | | | | | | | | | |
|---|---|---|---|---|---|---|---|---|---|---|---|
| 20 min. | 1.08 | 1.38 | 1.34 | 1.04 | 0.63 | 1.02 | 0.80 | 1.46 | 1.14 | 1.12 | 0.97 |
| 30 min. | 0.73 | 1.10 | 1.01 | 0.33 | 0.50 | 0.72 | 0.58 | 0.74 | 0.75 | 0.22 | 0.66 |

| **Quick Open Time CE 48.1** | [%] | | | | | | | | | | |
|---|---|---|---|---|---|---|---|---|---|---|---|
| 5 min. | 100 | 100 | 100 | 95 | 100 | 100 | 100 | 100 | 100 | 95 | 100 |
| 10 min. | 100 | 100 | 100 | 75 | 95 | 100 | 90 | 85 | 90 | 75 | 100 |
| 15 min. | 95 | 100 | 95 | 70 | 80 | 95 | 80 | 75 | 80 | 55 | 100 |
| 20 min. | 95 | 95 | 85 | 60 | 65 | 65 | 80 | 50 | 70 | 35 | 90 |
| 25 min. | 70 | 80 | 50 | 25 | 60 | 20 | 20 | 0 | 40 | 0 | 35 |
| 30 min. | 30 | 60 | 5 | 0 | 20 | <5 | <5 | 0 | <5 | 0 | <5 |
| Workability | 1-2 | 1 | 1 | 3 | 2 | 2 | 2 | 1-2 | 1-2 | 1-2 | 1-2 |
| Ribs | 1-2 | 1-2 | 1-2 | 4 | 4 | 2 | 2 | 1-2 | 1-2 | 1-2 | 1-2 |
| | 1= very good; 2=good; 3= satisfying;4= fair; 5= bad; 6= very bad | | | | | | | | | | |

## Claims

1. An additive for a hydraulic binder, the additive comprising a preblend of a powdered polyurethane flexible foam and a water redispersible polymer powder, said water redispersible polymer powder comprising a water insoluble film-forming polymer, the amount of the powdered polyurethane flexible foam being from 10% by weight to 80% by weight, based upon the total weight of the powdered polyurethane flexible foam and the water redispersible polymer powder, wherein the powdered polyurethane flexible foam has an average particle size of from 5 microns to 500 microns.

2. An additive as claimed in claim 1 wherein the powdered polyurethane flexible foam is a ground recycled flexible polyurethane foam.

3. An additive as claimed in claim 2 wherein the redispersible polymer powder has an average particle size of from 5 to 150 microns.

4. An additive as claimed in any one of claims 1-3 wherein the water insoluble film-forming polymer comprises a polymer prepared from a styrene butadiene copolymer, a styrene butadiene copolymerized with another comonomer, a vinylacetate ethylene copolymer, a vinylacetate ethylene copolymer / vinyl acetate-vinyl ester of versatic acid copolymer mixture, a polyurethane, or a polyolefin.

5. An additive as claimed in claim 1 wherein the water insoluble film-forming polymer comprises a polymer prepared from a styrene-butadiene copolymer, or a styrene butadiene copolymerized with another copolymer, or a vinylacetate-ethylene copolymer.

6. An additive as claimed in claim 2 wherein the amount of the powdered polyurethane flexible foam is from 20% by weight to 70% by weight, based upon the total weight of the powdered polyurethane flexible foam and the water redispersible polymer powder, and the powdered polyurethane flexible foam has an average particle size of from 20 microns to 150 microns.

7. An additive as claimed in any of the preceding claims, wherein the powdered polyurethane flexible foam is an open-celled polyurethane foam.

8. A method for producing an additive for a hydraulic binder comprising dry blending a powdered polyurethane flexible foam and a water redispersible polymer powder, said water redispersible polymer powder comprising a water insoluble film-forming polymer, the amount of the powdered polyurethane flexible foam being from 10% by weight to 80% by weight, based upon the total weight of the powdered polyurethane flexible foam and the water redispersible polymer powder, wherein the powdered polyurethane flexible foam has an average particle size of from 5 microns to 500 microns, and the redispersible polymer powder has an average particle size of from 5 to 150 microns.

9. A method for producing an additive as claimed in claim 8 wherein the water insoluble film-forming polymer comprises a polymer prepared from a styrene butadiene copolymer, a styrene butadiene copolymerized with another comonomer, a vinylacetate ethylene copolymer, a vinylacetate ethylene copolymer / vinyl acetate-vinyl ester of versatic acid copolymer mixture, a polyurethane, or a polyolefin, the amount of the powdered polyurethane flexible foam is from 20% by weight to 70% by weight, based upon the total weight of the powdered polyurethane flexible foam and the water redispersible polymer powder, and the powdered polyurethane flexible foam has an average particle size of from 20 microns to 150 microns.

10. A method as claimed in any of claims 8 to 9, wherein the powdered polyurethane flexible foam is an open-celled polyurethane foam.

## Patentansprüche

1. Ein Zusatzstoff für ein hydraulisches Bindemittel, wobei der Zusatzstoff eine Vormischung aus einem pulverförmigen Polyurethanweichschaumstoff und einem wasserredispergierbaren Polymerpulver beinhaltet, wobei das wasserredispergierbare Polymerpulver ein wasserunlösliches, filmbildendes Polymer beinhaltet, wobei die Menge des pulverförmigen Polyurethanweichschaumstoffs 10 Gew.-% bis 80 Gew.-%, bezogen auf das Gesamtgewicht des pulverförmigen Polyurethanweichschaumstoffs und des wasserredispergierbaren Polymerpulvers, beträgt, wobei der pulverförmige Polyurethanweichschaumstoff eine durchschnittliche Partikelgröße von 5 Mikrometer bis 500 Mikrometer aufweist.

2. Zusatzstoff gemäß Anspruch 1, wobei der pulverförmige Polyurethanweichschaumstoff ein gemahlener, rezyklierter Polyurethanweichschaumstoff ist.

3. Zusatzstoff gemäß Anspruch 2, wobei das redispergierbare Polymerpulver eine durchschnittliche Partikelgröße von 5 bis 150 Mikrometer aufweist.

4. Zusatzstoff gemäß einem der Ansprüche 1-3, wobei das wasserunlösliche filmbildende Polymer ein aus einem Styrol-Butadien-Copolymer, einem mit einem weiteren Comonomer copolymerisierten Styrol-Butadien, einem Vinylacetat-Ethylen-Copolymer, einer Vinylacetat-Ethylen-Copolymer/Vinylacetat-Vinylester-der-Versaticsäure-Copolymermischung, einem Polyurethan oder einem Polyolefin zubereitetes Polymer beinhaltet.

5. Zusatzstoff gemäß Anspruch 1, wobei das wasserunlösliche filmbildende Polymer ein aus einem Styrol-Butadien-Copolymer oder einem mit einem weiteren Copolymer copolymerisierten Styrol-Butadien oder einem Vinylacetat-Ethylen-Copolymer zubereitetes Polymer beinhaltet.

6. Zusatzstoff gemäß Anspruch 2, wobei die Menge des pulverförmigen Polyurethanweichschaumstoffs 20 Gew.-% bis 70 Gew.-%, bezogen auf das Gesamtgewicht des pulverförmigen Polyurethanweichschaumstoffs und des wasserredispergierbaren Polymerpulvers, beträgt und der pulverförmige Polyurethanweichschaumstoff eine durchschnittliche Partikelgröße von 20 Mikrometer bis 150 Mikrometer aufweist.

7. Zusatzstoff gemäß einem der vorhergehenden Ansprüche, wobei der pulverförmige Polyurethanweichschaumstoff ein offenzelliger Polyurethanschaumstoff ist.

8. Ein Verfahren zum Herstellen eines Zusatzstoffs für ein hydraulisches Bindemittel, beinhaltend das Trockenvermischen eines pulverförmigen Polyurethanweichschaumstoffs und eines wasserredispergierbaren Polymerpulvers, wobei das wasserredispergierbare Polymerpulver ein wasserunlösliches, filmbildendes Polymer beinhaltet, wobei die Menge des pulverförmigen Polyurethanweichschaumstoffs 10 Gew.-% bis 80 Gew.-%, bezogen auf das Gesamtgewicht des pulverförmigen Polyurethanweichschaumstoffs und des wasserredispergierbaren Polymerpulvers, beträgt, wobei der pulverförmige Polyurethanweichschaumstoff eine durchschnittliche Partikelgröße von 5 Mikrometer bis 500 Mikrometer aufweist und das redispergierbare Polymerpulver eine durchschnittliche Partikelgröße von 5 Mikrometer bis 150 Mikrometer aufweist.

9. Verfahren zum Herstellen eines Zusatzstoffs gemäß Anspruch 8, wobei das wasserunlösliche filmbildende Polymer ein aus einem Styrol-Butadien-Copolymer, einem mit einem weiteren Comonomer copolymerisierten Styrol-Butadien, einem Vinylacetat-Ethylen-Copolymer, einer Vinylacetat-Ethylen-Copolymer/Vinylacetat-Vinylester-der-Versaticsäure-Copolymermischung, einem Polyurethan oder einem Polyolefin zubereitetes Polymer beinhaltet, wobei die Menge des pulverförmigen Polyurethanweichschaumstoffs 20 Gew.-% bis 70 Gew.-%, bezogen auf das Gesamtgewicht des pulverförmigen Polyurethanweichschaumstoffs und des wasserredispergierbaren Polymerpulvers, beträgt und der pulverförmige Polyurethanweichschaumstoff eine durchschnittliche Partikelgröße von 20 Mikrometer bis 150 Mikrometer aufweist.

10. Verfahren gemäß einem der Ansprüche 8 bis 9, wobei der pulverförmige Polyurethanweichschaumstoff ein offenzelliger Polyurethanschaumstoff ist.

## Revendications

1. Un additif pour un liant hydraulique, l'additif comprenant un prémélange homogène d'une mousse souple de polyuréthane en poudre et d'une poudre de polymère redispersable dans l'eau, ladite poudre de polymère redispersable dans l'eau comprenant un polymère filmogène insoluble dans l'eau, la quantité de la mousse souple de polyuréthane en poudre allant de 10 % en poids à 80 % en poids, rapporté au poids total de la mousse souple de polyuréthane en poudre et de la poudre de polymère redispersable dans l'eau, la mousse souple de polyuréthane en poudre ayant une dimension moyenne des particules allant de 5 microns à 500 microns.

2. Un additif tel que revendiqué dans la revendication 1 dans lequel la mousse souple de polyuréthane en poudre est une mousse de polyuréthane souple recyclée broyée.

3. Un additif tel que revendiqué dans la revendication 2 dans lequel la poudre de polymère redispersable a une dimension moyenne des particules allant de 5 à 150 microns.

4. Un additif tel que revendiqué dans n'importe laquelle des revendications 1 à 3 dans lequel le polymère filmogène insoluble dans l'eau comprend un polymère préparé à partir d'un copolymère de styrène et de butadiène, d'un styrène butadiène copolymérisé avec un autre comonomère, d'un copolymère d'acétate de vinyle et d'éthylène, d'un mélange de copolymère d'acétate de vinyle et d'éthylène / copolymère d'acétate de vinyle-ester vinylique d'acide versatique, d'un polyuréthane, ou d'une polyoléfine.

5. Un additif tel que revendiqué dans la revendication 1 dans lequel le polymère filmogène insoluble dans l'eau comprend un polymère préparé à partir d'un copolymère de styrène et de butadiène, ou d'un styrène butadiène copolymérisé avec un autre copolymère, ou d'un copolymère d'acétate de vinyle et d'éthylène.

6. Un additif tel que revendiqué dans la revendication 2 dans lequel la quantité de la mousse souple de polyuréthane en poudre va de 20 % en poids à 70 % en poids, rapporté au poids total de la mousse souple de polyuréthane en poudre et de la poudre de polymère redispersable dans l'eau, et la mousse souple de polyuréthane en poudre a une dimension moyenne des particules allant de 20 microns à 150 microns.

7. Un additif tel que revendiqué dans n'importe lesquelles des revendications précédentes, dans lequel la mousse souple de polyuréthane en poudre est une mousse de polyuréthane à alvéoles ouvertes.

8. Un procédé pour produire un additif pour un liant hydraulique comprenant le mélange à sec de manière homogène d'une mousse souple de polyuréthane en poudre et d'une poudre de polymère redispersable dans l'eau, ladite poudre de polymère redispersable dans l'eau comprenant un polymère filmogène insoluble dans l'eau, la quantité de la mousse souple de polyuréthane en poudre allant de 10 % en poids à 80 % en poids, rapporté au poids total de la mousse souple de polyuréthane en poudre et de la poudre de polymère redispersable dans l'eau, la mousse souple de polyuréthane en poudre ayant une dimension moyenne des particules allant de 5 microns à 500 microns, et la poudre de polymère redispersable ayant une dimension moyenne des particules allant de 5 à 150 microns.

9. Un procédé pour produire un additif tel que revendiqué dans la revendication 8 dans lequel le polymère filmogène insoluble dans l'eau comprend un polymère préparé à partir d'un copolymère de styrène et de butadiène, d'un styrène butadiène copolymérisé avec un autre comonomère, d'un copolymère d'acétate de vinyle et d'éthylène, d'un mélange de copolymère d'acétate de vinyle et d'éthylène / copolymère d'acétate de vinyle-ester vinylique d'acide versatique, d'un polyuréthane, ou d'une polyoléfine, la quantité de la mousse souple de polyuréthane en poudre va de 20 % en poids à 70 % en poids, rapporté au poids total de la mousse souple de polyuréthane en poudre et de la poudre de polymère redispersable dans l'eau, et la mousse souple de polyuréthane en poudre a une dimension moyenne des particules allant de 20 microns à 150 microns.

10. Un procédé tel que revendiqué dans n'importe lesquelles des revendications 8 à 9, dans lequel la mousse souple de polyuréthane en poudre est une mousse de polyuréthane à alvéoles ouvertes.
